# EUROPEAN PATENT APPLICATION

(11) **EP 2 947 551 A1**
(43) Date of publication of application: **25.11.2015**
(21) Application number: 15168151.7
(22) Date of filing: 19.05.2015
(51) Int. Cl.: G06F 3/023, G06F 3/02, G06F 3/0488

(54) **INTERACTIVE DEVICE COMPRISING AN EMAIL ADDRESS KEY**

(30) Priority: 22.05.2014 NL 1040813
(71) Applicant: Shortwood B.V., 81927 Munich (DE)
(72) Inventor: Duxbury, Stephen, 81927 Munich (DE)
(74) Representative: Duxbury, Stephen

(57) **Abstract**

An interactive device such as a smartphone, tablet or pc, which device can be used for sending text messages, the device comprising an email address key, whereby actuating the email address key displays an email address stored in the device on a screen of the device, which interactive device can be used for composing a message to be sent by the device comprising the step of inserting an email into a message, for example a WhatsApp chat line message, by way of actuating the email address key of the device, whereafter the message can be sent.

## Description

The present invention relates to interactive devices, specifically interactive devices used to send and receive text messages such as smartphones, tablets or pc's.

A problem with interactive devices used for sending and receiving text messages, such as emails, sms messages or WhatsApp messages, is that when a user wishes to send an email address via the text message, the email address is required to be entered letter by letter, cipher by cipher and number by number into the message by typing the address from a keyboard into the message.

The present invention addresses this problem.

According to a first aspect of the present invention, there is provided an interactive device such as a smartphone, tablet or pc, which device can be used for sending text messages, the device comprising an email address key, whereby actuating the email address key displays an email address stored in the device on a screen of the device.

As will be understood, the term 'email address key' is used for a key whose function is to display an email address on the screen of the device on actuation of the key.

In other words, when a user wishes to send their email address in a text message, or for example is required to enter their email address into an online form, instead of laboriously typing the complete email address out, letter for letter, cipher for cipher, number for number, a single actuation, by way of a single touch or single depression of the email address key displays the complete email address on the screen.

Actuation of the email address key encompasses touching, depressing or any other manner of displaying the email address by way of actuating the key.

For example, when using a smartphone with a touch screen keypad, a single touch of the email address key displays the complete email address in the screen of the device.

Alternatively, when using a pc with either an integrated push button keyboard, or a separate keyboard wirelessly linked to the pc for example, pushing the email address key displays the complete email address.

In a preferred embodiment, the email address key is comprised in a keyboard of the device.

For the purposes of the present invention, the term keyboard encompasses a touch screen keyboard, or keypad, a push button keyboard or keypad, or a virtual keyboard or keypad.

For the purposes of the present invention, the term actuation is used to describe the action needed to cause the email address key to display the email address on the screen of the device.

In this regard, actuation means a single action.

For example, and as referred to above, on wishing to enter an email address into a message, the user simply pushes, one time, the email address key. It is not required to push the email address key a plurality of times, or in a particular sequential order together with other keys, to display the email address in the message. In other words, actuation of the email address key- causes the complete email address to appear on the screen at once. Actuation of the email address key does not effect the selection of a part, or string, of an email address, whereby further selection actions, for example further actuation of the email address key then effects selection of a particular complete email address in the screen from a number of pre-programmed email addresses. On the contrary, in the most preferred embodiment, a single email address , for example the email address of the owner of the interactive device, is linked to the email address key, whereby on actuation of the email address key, no selection between a number of pre-programmed email addresses is required, a single, one-time actuation of the email address key rather causing the appearance of the complete email address, linked to the email address key, to appear at once in the screen.

In an embodiment the email address key can be functionalized in a pre-existing key of a standard keyboard of the device, for example by the user or, during production of the device.

In a preferred embodiment, the email address key is an extra key- in addition to the keys present on a standard keyboard- added to the device's keyboard during production of the device or keyboard, and functionalized to display an email address, following actuation of the email address key.

In this embodiment, it is clearer to the user which key on the keyboard is the email address key.

Alternatively, the email address key can replace a previously existing key on a standard keyboard.

It is understood that a standard keyboard comprises the keys normally present for example on pushbutton keyboard of a pc, or the keys present on a touch screen display of an interactive device such as a tablet or a smartphone.

The device is preferably configured during factory assembly to enable display of an email address by way of actuation of the email address key, once a desired email has been inserted into the device's memory.

As such, on taking possession of the inter-active device, the user has only to enter their email address into the memory of the device for the email address to be displayed on the device's screen on actuation of the email address key.

This is the only time therefore that the user of the device according to the present invention would be required to enter their complete email address, letter by letter, cipher by cipher and number by number, into the device. Thereafter, when the user wishes to display their complete email address on the screen of the device, for example as part of a message to be sent, the user only needs to actuate, for example touch, the email address key on the keyboard.

In other words, when the user is writing a message and wishes to place their email address into the message, at the appropriate point the user simply actuates by way of, for example, a single touch, tap or depression of the email address key, and the complete email address is displayed in the message.

Preferably the email address is writeable into the information store/memory of the device via the keyboard. A plurality of email addresses can be entered and stored into the memory of the interactive device in this manner.

Alternatively if the device is equipped with the required software, the user can dictate the email address/es into the device.

Further the device can be configured such that successive touching, depressing or any other manner of actuating the email address key, results in the successive display of different stored email addresses on the screen.

Successive actuation of the email address key, for example by way of sequentially touching or depressing the key, displays in succession the email addresses stored in the device, The email addresses can either be individually or collectively displayed on the screen.

The device can also be configured so that a selection of the email addresses stored in the device can also be displayed on the screen by way of successive actuation of the email address key.

Following display of a desired email address in this way, the email address can then be sent via a text message from the device.

For example, during composition of a text message using the interactive device such as a smart phone with a touch screen, the user simply touches the email address key of the touch screen keyboard and an email address stored in the memory of the smart phone is displayed in its entirety in the message. When the message is complete, it can then be sent by hitting the send command.

As such, when the user wishes to send an email address by way of a text message, it is not necessary for the user to type out one by one the letters and/or ciphers of the email address into the message from the keyboard. The complete email address now appears in the message by way of a single actuation of the email address key.

The email address is displayed on the screen at the position of the cursor when the email address key is actuated.

As such, in addition to displaying the email address as part of a text message on actuating the email address key when the cursor is positioned in the text message, actuating the email address key when the cursor is present in any of the email bars indicating for example to whom the email is to be sent, cc, bcc, or the subject bar etc, will display the email in this bar.

Accordingly the email address key can also be used for online form filling for example, i.e. when an online form requires an email address to be inserted at an appropriate place.

In a preferred embodiment, the sole function of the email address key is to display the email address on the screen of the device.

However, the device can also be configured to display a different set of letters, ciphers, numbers or a combination thereof, such as a password stored in the memory of the device on the display on actuation of email address key.

In a preferred embodiment, actuation of the email address key, effects display of the email address at the position of the cursor in a WhatsApp chat line message displayed on the screen.

According to a second aspect, the present invention relates to a method for displaying an email address on a screen of an interactive device, such as those referred to above, comprising the step of actuating an email address key on a keyboard associated with the interactive device.

As stated above, actuation of the email address key to display the complete email address only requires a single act or operation, i.e. a single depression/touching of the email address key, rather than a complicated series of acts, such as a specific sequential touching of one or more keys on the keyboard, which can also result in the selection of a an undesired email address.

Prior to display of the email address on the screen of the interactive device, the user can enter the email address into an information store of the device.

For example, when using a smartphone, the user can enter an email address into the memory of the smartphone, by way of the settings for example, whereafter, on touching the email address key, the stored email address is displayed on the screen of the smartphone.

In such a way, the stored email address can be displayed on the screen as part of a text message which can be subsequently sent.

Upon successive touching, depressing or any other manner of activating the email address key, different email addresses stored in the device can be displayed in succession.

After display of the one or more email addresses on the screen, it/they can be sent via a text message from the interactive device.

When a plurality of email addresses are displayed on the screen, one or more thereof can be selected to be sent via a text message from the interactive device.

The user can select a single email address, a selection of email addresses from those stored, or all of the stored email addresses to be displayed by the device, which can subsequently be sent by text message.

Alternatively, the user can select from all of the email addresses displayed on the screen a selection to be subsequently sent by a text message.

According to a further aspect, the invention relates to method for composing a message to be sent by an interactive device, comprising the step of inserting an email into a message, for example a WhatsApp chat line message, by way of actuating an email address key of a device as described above.

Once the email address is inserted at the required location in a message, the message can be sent.

When a plurality of email addresses are displayed on the screen, one or more thereof is/are selected to be sent via a text message from the interactive device.

According to another aspect of the invention, there is provided a method for displaying an email address on a screen of the device described above, comprising the step of actuating the email address key of the device.

Another aspect of the invention is concerned with a keyboard for an interactive device, said keyboard comprising an additional key, which key is configured such that on actuation thereof, an email address is displayed on a screen of an interactive device.

Such a keyboard can be used, for example, wirelessly with a tablet or a pc, and the keyboard can be a pushbutton keyboard or a touch screen keyboard for example.

Another aspect of the invention relates to a system which can be used for sending text messages, the system comprising an inter-active device such as a pc, tablet or smartphone, and this keyboard. For example, such a system comprises a tablet wirelessly linked to a separate keyboard.

A further aspect of the invention includes a method of producing an interactive device comprising the step of providing the device with an email address key, whereby actuation of the email address key displays an email address stored in the device on a screen of the device, preferably wherein the email address key is provided as an extra key in addition to keys provided as standard on a keyboard of the device, or as a replacement key replacing a pre-existing key on a standard keyboard.

Aspects of the invention are referred to in the following clauses:
1. An interactive device such as a smartphone, tablet or pc, which device can be used for sending text messages, the device comprising an email address key, whereby actuating the email address key displays an email address stored in the device on a screen of the device.
2. The device of clause 1 wherein the email address key is comprised in a keyboard of the device.
3. The device of clause 2 wherein the keyboard is a touch screen keyboard, a push button keyboard, or a virtual keyboard.
4. The device of clauses 2 or 3, wherein the email address key is functionalized in a pre-existing key of the device's keyboard, for example by the user or during production of the device.
5. The device of clauses 2 or 3 wherein the email address key is an additional key, added to the device's keyboard, or is a replacement key, which replaces an existing key on the device's keyboard.
6. The device according to any of the preceding clauses wherein actuating the email address key consists of touching and/or depressing the email address key.
7. The device according to any of the preceding clauses, wherein the email address key is provided to, and/or functionalized in, the device during factory assembly of the device.
8. The device according to any of the preceding clauses wherein the device is configured during factory assembly to enable display of an email address by way of actuation of the email address key, once a desired email has been inserted into the device's memory.
9. The device according to any of the preceding clauses 2-8 whereby the email address is writeable into the information store of the device via the keyboard.
10. The device according to any of the preceding clauses configured such that successively actuating the email address key results in the successive display of different stored email addresses on the screen.
11. The device according to any of the preceding clauses configured such that successively actuating the email address key results in the selection of one or more stored email addresses to be displayed on the screen.
12. The device according to any of the preceding clauses wherein one or more of the email addresses displayed on the screen are selectable to be sent via a message from the interactive device.
13. The device according to any of the preceding clauses wherein the sole function of the email address key is to effect the display of the email address on the screen of the device.
14. The device according to any of the preceding clauses 1-12, wherein the device is configured to display a password stored in the memory of the device on the display on actuation of email address key, either in addition to, or instead of, a stored email address.
15. The device according to any of the preceding clauses wherein actuation of the email address key, effects display of the email address at the position of the cursor on the screen, for example at the cursor in a WhatsApp chat line message.
16. Method for displaying an email address on a screen of a device comprising the step of actuating a key on a keyboard of the device.
17. Method according to clause 16 whereby the step of actuating the key, consists of a single act or operation,
18. Method according to any of the preceding clauses 16 or 17 whereby prior to displaying the email address, said email address is deposited into an information store of the device.
19. Method according to any of the preceding clauses 16-18, whereby successive actuation of the key results in the successive display of different stored email addresses on the screen.
20. Method according to any of the preceding clauses 16-19 whereby successive actuation of the key results in the selection of one or more stored email addresses to be displayed on the screen.
21. Method according to any of the preceding clauses 16-20 whereby after display of the one or more email addresses on the screen, it/they is/are sent via a text message from the interactive device.
22. Method for composing a message to be sent by an interactive device according to any of the preceding clauses 1-15, comprising the step of inserting an email into a message, for example a WhatsApp chat line message, by way of actuating the email address key of the device.
23. Method according to clause 22 comprising the further step of sending the message.
24. Method according to clause 22 or 23, whereby when a plurality of email addresses are displayed on the screen, one or more thereof is/are selected to be sent via a text message from the interactive device.
25. Method for displaying an email address on a screen of a device according to any of the preceding clauses 1-15, comprising the step of actuating the email address key of the device.
26. Use of a device according to any of the preceding clauses 1-15 in a method according to any of the clauses 16-25.
27. A keyboard for an interactive device, said keyboard comprising an additional key, which key is configured such that on actuation thereof, an email address is displayed on a screen of an interactive device.
28. A system which can be used for sending text messages, the system comprising an interactive device such as a pc, tablet or smartphone, and a keyboard according to clause 27..
29. Method of producing a device according to any of the preceding clauses 1-15, comprising the step of providing the device with an email address key, whereby actuation of the email address key, displays an email address stored in the device on a screen of the device.
30. Method according to clause 29 wherein the email address key is provided as an extra key in addition to keys provided as standard on a keyboard of the device, or as a replacement key replacing a pre-existing key on a standard keyboard.

The invention is now described by way of the following specific description and figures, wherein:
Figure 1 is view of a smartphone of the prior art showing a touchscreen keyboard.
Figure 2 is view of a smartphone of the present invention showing a touchscreen keyboard having an email address key in addition to the standard keys and displaying an email address in a message following actuation of the email address key.
Figure 3 is a view of a push button keyboard of the present invention having an email address key in addition to the standard keyboard keys
Figure 4 shows the email address key, having an icon which is a combination of the @ icon and capitol letter Y. (This combination is copyrighted).

It is noted that configuration of an interactive device according to the present invention in order to provide an email address key, or to configure a pre-existing key to function as an email address key, such that actuation of the email address button results in the display of an email address on the device's touchscreen can be achieved by a person skilled in the art using their general knowledge of interactive devices and how these can be programmed.

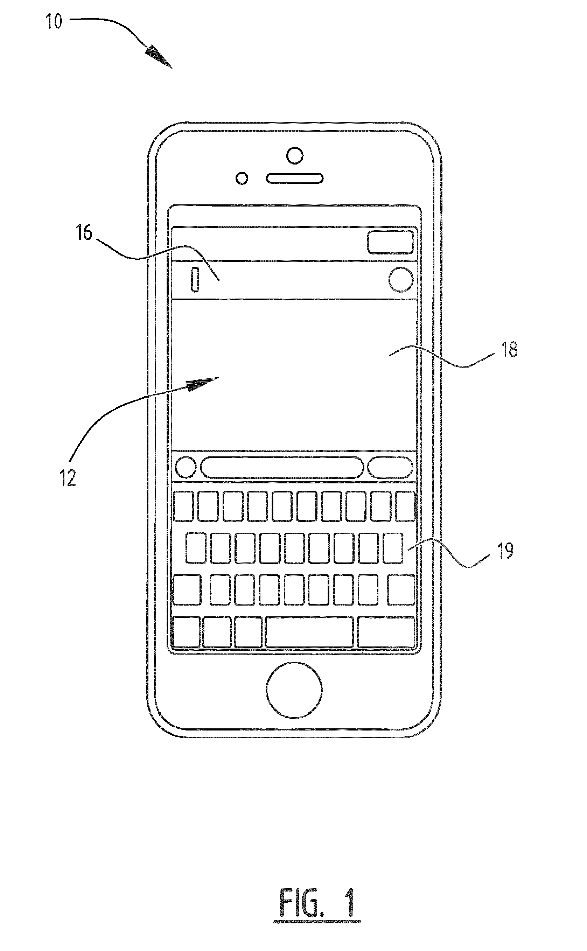

A prior art smartphone 10 is shown in Figure 1, wherein the screen display 12 includes a touchscreen keyboard 19, a 'To:' bar 16 in which bar the email addresses of the recipients of a message are entered, and a message area 18 in which the message is typed.

When a user wishes to send their email address in a message, the user must firstly type out their complete email address using the letters, ciphers and numbers present on the keyboard 19 into the message area 18.

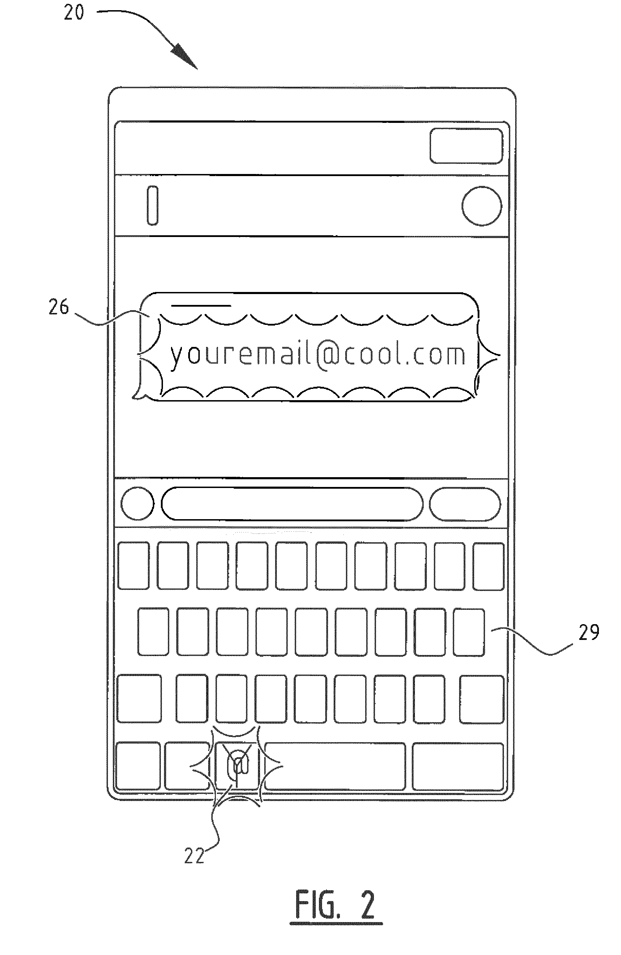

A smartphone 20 according to the present invention is shown in Figure 2, and includes an extra key 22 on the touchscreen keyboard 29 which key 22- the email address key- displays the user's complete email address on the screen display when it is touched.

For example, Figure 2 depicts a screenshot of the smartphone's display when a user has touched the email address key 22 to thereby insert their email address into a WhatsApp message 'bubble' 26 displayed on the screen, and send this message to the person they're chatting with.

In other words, when composing a message and wishing to include one's email address in the message, the owner of the inter-active device simply touches a single time the email address key icon, whereafter the owner's complete email address appears in the screen. As described earlier, actuation of the email address key to effect the appearance of the complete email address in the message in a single action, means a single, unique, event, which single, unique, event does not form part of a sequence of events, i.e. a plurality of actuations of the email address key.

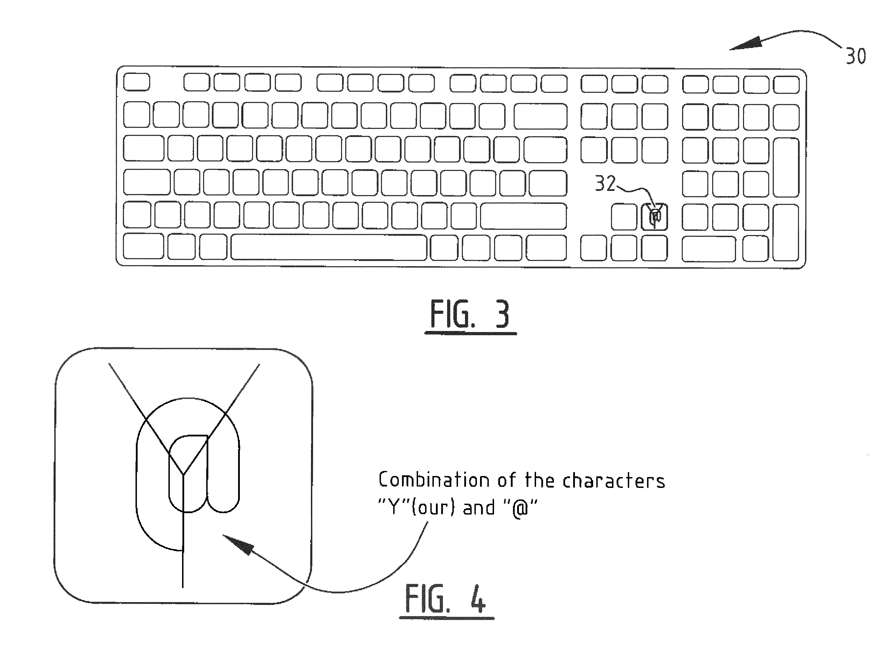

A pc keyboard 30 is depicted in Figure 3 having an additional key 32, which additional key is the email address key.

Figure 4 depicts the icon of the email address key being a combination of the @ icon and capitol letter Y.

## Claims

1. An interactive device such as a smartphone, tablet or pc, which device can be used for sending text messages, the device comprising an email address key, whereby actuating the email address key displays an email address stored in the device on a screen of the device.

2. The device of claim 1 wherein the email address key is comprised in a keyboard of the device, for example wherein the keyboard is a touch screen keyboard, a push button keyboard, or a virtual keyboard.

3. The device of claims 2 wherein the email address key is functionalized in a pre-existing key of the device's keyboard, for example by the user or during production of the device, or wherein the email address key is an additional key, added to the device's keyboard, or is a replacement key, which replaces an existing key on the device's keyboard.

4. The device according to any of the preceding claims wherein actuating the email address key consists of touching and/or depressing the email address key.

5. The device according to any of the preceding claims configured such that successively actuating the email address key results in the successive display of different stored email addresses on the screen, and/or configured such that successively actuating the email address key results in the selection of one or more stored email addresses to be displayed on the screen.

6. The device according to any of the preceding claims wherein one or more of the email addresses displayed on the screen are selectable to be sent via a message from the interactive device.

7. The device according to any of the preceding claims wherein the sole function of the email address key is to effect the display of the email address on the screen of the device.

8. The device according to any of the preceding claims wherein actuation of the email address key, effects display of the email address at the position of the cursor on the screen, for example at the cursor in a WhatsApp chat line message.

9. Method for displaying an email address on a screen of a device comprising the step of actuating a key on a keyboard of the device.

10. Method according to claim 9 whereby the step of actuating the key, consists of a single act or operation.

11. Method according to any of the preceding claims 9-10 whereby successive actuation of the key results in the successive display of different stored email addresses on the screen and/or whereby successive actuation of the key results in the selection of one or more stored email addresses to be displayed on the screen.

12. Method according to any of the preceding claims 9-11 whereby after display of the one or more email addresses on the screen, it/they is/are sent via a text message from the interactive device.

13. Method for composing a message to be sent by an interactive device according to any of the preceding claims 1-8, comprising the step of inserting an email into a message, for example a WhatsApp chat line message, by way of actuating the email address key of the device, preferably comprising the further step of sending the message.

14. A keyboard for an interactive device, said keyboard comprising an additional key, which key is configured such that on actuation thereof, an email address is displayed on a screen of an interactive device.

15. A system which can be used for sending text messages, the system comprising an interactive device such as a pc, tablet or smartphone, and a keyboard according to claim 14.
